# EUROPÄISCHE PATENTSCHRIFT

(11) **EP 0 436 937 B1**
(45) Veröffentlichungstag und Bekanntmachung des Hinweises auf die Patenterteilung: **05.04.1995**
(21) Anmeldenummer: 90125642.0
(22) Anmeldetag: 28.12.1990
(51) Int. Cl.: C07F 9/32

(54) **Verfahren zur Synthese von Methyl-(2-carboalkoxy-ethyl)-phosphinsäurealkylestern**
Process for synthesis of methyl-(2-carboalkoxy-ethyl)-phosphinic acid alkyl esters
Procédé de synthèse d'esters de l'acide méthyl-(2-carboalkoxy-éthyl)-phosphinique

(30) Priorität: 06.01.1990 DE 4000237
(43) Veröffentlichungstag der Anmeldung: 17.07.1991
(73) Patentinhaber: Hoechst Schering AgrEvo GmbH, 13342 Berlin (DE)
(72) Erfinder: Knorr, Harald, Dr., W-6000 Frankfurt am Main (DE)

(56) Entgegenhaltungen:
- DE-A- 3 245 364
- METHODEN DER ORGANISCHEN CHEMIE, 4. Auflage, Band XII/1, 1963, GEORG THIEMEVERLAG, E.MUELLER "Methoden der organischen Chemie", (HOUBEN-WEYL) Seiten 248-249
- CHEMICAL ABSTRACTS, Band 67, 28. August - 18. September 1967, Columbus, Ohio,USA; V. K. KHAIRULLIN et al. "Reaction of methyldichloro- phosphine withacrylic acid" Seite 5107, Zusammenfassung-Nr. 54 222a
- CHEMICAL ABSTRACTS, Band 71, 18. August 1969, Columbus, Ohio, USA; V. K.KHAIRULLIN et al. "Synthhsis and some propertiesof ethyl(beta-(ethoxycar-bonyl)ethyl)phosphinyl- chloride" Seite 307, Zusammenfassung- Nr. 30 547s

## Beschreibung

Gegenstand der vorliegenden Erfindung ist ein Verfahren zur Herstellung von Verbindungen der Formel I 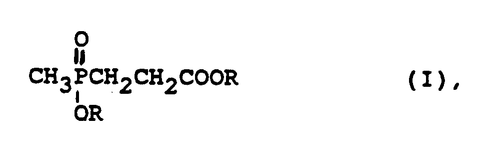
worin R jeweils unabhängig voneinander (C₄-C₈)Alkyl bedeutet, dadurch gekennzeichnet, daß man eine Verbindung der Formel II 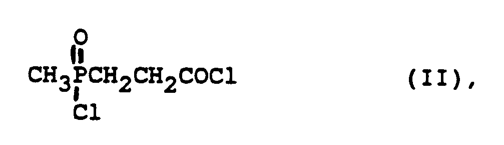
mit einem Alkohol oder einem Gemisch von Alkoholen der Formel III

ROH (III),

worin R die bei Formel I genannte Bedeutung hat, bei Temperaturen von -30 °C bis +50 °C umsetzt.

Bevorzugt haben die Reste R in Formel I die gleiche Bedeutung bzw. wird nur eine Verbindung der Formel III eingesetzt. Besonders bevorzugt ist das erfindungsgemäße Verfahren bei dem R Butyl, insbesondere n-Butyl bedeutet.

Die Verbindungen der Formel I sind wichtige Vor- und Zwischenprodukte bei der Synthese herbizidwirksamer Substanzen (EP-A 30424).

Bekannt ist die Umsetzung von strukturell einfachen Phosphinsäurehalogeniden mit Alkoholaten bzw. Alkohol zu den entsprechenden Phosphinsäureestern. Jedoch sind die Ausbeuten, insbesondere wenn man auf den Einsatz inerter Lösungsmittel verzichtet, bei diesen Verfahren unbefriedigend (Ausbeute weniger als 50 %; siehe Houben-Weyl, Methoden der org. Chemie, Band XII/1 (1983) S. 248). Durch Zusatz des Lösungsmittels Benzol können teilweise Produktausbeuten von ca. 80 % erzielt werden.

Auch die Herstellung von Phosphinsäureestern der Formel I nach anderen Literaturstellen führt zu Ausbeuten, die für den technischen Maßstab als unzureichend gelten müssen. So erhält man beispielsweise nach Chairullin, Sobchuk, Pudovik, Z. obsc. Chim. 37 (1967) Nr. 3, Seite 710-714, engl. S. 660-669 lediglich 33 bis 41 % Produktausbeute. Unter Verwendung von Benzol als Lösungsmittel erhält man mit kaltem Äthanol nur 47 % d. Th. des gewünschten Esters (Chairullin, Vasjanina, Pudovik, Z. obsc. Chim. 39 (1969) Nr. 2, Seite 341-346).

In Gegenwart von Triäthylamin als Hilfsbase fallen die Verbindungen der Formel I nach Chairullin (Doklady, Akad. SSSR 162 (1965) Nr. 4, Seite 827-828) in 50-58 % Ausbeute an.

Somit müssen die nach den literaturbekannten Verfahren erhaltenen Phosphinsäurealkylester der Formel I vor ihrer Weiterverarbeitung zusätzlichen Reinigungsprozessen unterworfen werden. Darüberhinaus sind die in erheblichem Ausmaß angefallenen Nebenprodukte aufzuarbeiten und/oder zu entsorgen, was aus ökonomischer als auch ökologischer Sicht nachteilig zu bewerten ist.

Alle diese geschilderten Nachteile werden beim erfindungsgemäßen Verfahren vermieden, bei dem die gewünschten Produkte der Formel mit Ausbeuten von über 90 % d. Th. erhalten werden können. Darüberhinaus ist das erfindungsgemäße Verfahren sehr einfach zu handhaben und ist auch für einen kontinuierlichen Betrieb geeignet.

In der EP-A 423 746, veröffentlicht am 24.04.91) wurde bereits vorgeschlagen, Methyl-(2-carbo(C₁-C₄)alkoxy-ethyl)-phosphinsäure-(C₁-C₄)alkylester durch Umsetzung einer Verbindung der obengenannten Formel (II) mit (C₁-C₄)Alkoholaten in alkoholischer Lösung herzustellen.

Erfindungsgemäß einsetzbare Alkohole der Formel III sind beispielsweise Butanole wie n-Butanol, iso-Butanol, sek.-Butanol und 2-Butanol, Pentanole wie n- und iso-Amylalkohol, Hexanole, Heptanole und Oktanole.

Das erfindungsgemäße Verfahren kann gegebenenfalls unter Zusatz eines unter den Verfahrensbedingungen inerten Lösungsmittels durchgeführt werden. Beispiele für derartige Lösungsmittel sind gegebenenfalls halogenierte aromatische und aliphatische Kohlenwasserstoffe.

Die Verbindung der Formel II ist aus Methyldichlorphosphan und Acrylsäure zugänglich (Chairullin, Sobchuk, Pudovik, Z. obsc. Chim. 37 (1967), Seite 710-714).

Die Umsetzung der Verbindungen II und III erfolgt bei Temperaturen von -30 °C bis +50 °C, vorzugsweise jedoch von -10 °C bis +20 °C.

Die Menge an Alkohol der Formel III, welche benötigt wird, liegt aus Gründen der Stöchiometrie bei mindestens 2 Mol pro 1 Mol Verbindung der Formel II. Zweckmäßig wird die Alkoholmenge erhöht, wenn die eingesetzte Verbindung der Formel II durch Nebenkomponenten verunreinigt ist, die selbst mit dem Alkohol der Formel III reagieren können, wie z.B. 1,3-Dioxo-1-methyl-2-oxa-1-phospholan der Formel 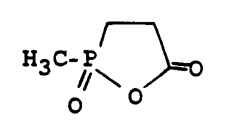
(siehe DE-A-25 31 238). Der Alkohol kann aber auch als Lösungmittel verwendet werden. Bevorzugt werden 2 bis 4 Mol Alkohol der Formel III pro 1 Mol Verbindung der Formel II eingesetzt.

Das erfindungsgemäße Verfahren läßt sich beispielsweise so durchführen, daß man den Alkohol der Formel III bei 0 °C vorlegt, das Dichlorid bei dieser Temperatur und unter Normaldruck zudosiert, nachrührt und dann auf Raumtemperatur kommen läßt. Die Isolierung des Produkts kann nach üblichen Methoden erfolgen. Je nach verwendeten Alkohol und gegebenenfalls zusätzlichen Lösungsmittel werden einige Methoden besonders geeignet sein. Im Falle von n-Butanol als Alkohol der Formel III kann überschüssiger Alkohol und HCl unter reduziertem Druck und Erwärmen auf 50 °C leicht aus dem Produktgemisch entfernt werden, bevor die Isolierung des Produkts, beispielsweise durch Destillation mit einem Dünnschichtverdampfer, erfolgt.

Eine andere Möglichkeit der Fahrweise besteht darin, den Alkohol der Formel III unter reduziertem Druck vorzulegen und das Dichlorid zuzudosieren. Dabei wird der Druck vorzugsweise im Bereich von 1013 bis 5 mbar in Abhängigkeit von der Reaktionstemperatur so eingestellt, daß die Reaktionslösung siedet und somit ein Teil des Chlorwasserstoffs bereits während des Ablaufs der Reaktion entfernt wird. Der Druck beträgt beispielsweise im Falle R = n-Butyl und 20 °C Reaktionstemperatur etwa 20 mbar oder bei 0 °C 6 mbar. Nach Beendigung der Zugabe wird nachgerührt, dann auf 50 °C erwärmt und restlicher Chlorwasserstoff und Alkohol der Formel III entfernt.

Die erhaltene Rohware ist ca. 84-87 %ig, wenn der Ausgangsstoff der Formel II mit einer technischen Reinheit von 92 % eingesetzt worden ist, und kann destillativ von der in der Regel ebenfalls vorliegenden Methyl-(2-carboalkoxy-ethyl)-phosphinsäure (z.B. Methyl-(2-carbo-n-butoxy-ethyl)-phosphinsäure) abgetrennt werden.

In den folgenden Beispielen beziehen sich Prozentangaben auf das Gewicht, wenn nichts anderes angegeben ist.

### Beispiel 1

Bei 0 °C werden 300 ml n-Butanol (trocken) vorgelegt und unter Rühren innerhalb von 1 Stunde mit 189 g 92 %igem Methyl-(2-chlorcarbonyl-ethyl)-phosphinsäurechlorid (II) 0,92 mol, 92 %ig nach P³¹-NMR) versetzt. Man rührt 30 Minuten nach und läßt auf Raumtemperatur kommen. Dann wird Vakuum angelegt und Chlorwasserstoff und n-Butanol bei 50 °C Badtemperatur abdestilliert. Man erhält 270,3 g Rohprodukt, welches 84,3 % Methyl-(2-carbo-n-butoxy-ethyl)-phosphinsäure-n-butylester (I) enthält (93,8 % d.Th.).

Das Rohprodukt wird mit Hilfe eines Dünnschichtverdampfers bei 145 °C Manteltemperatur und bei 0,1 mbar von der Phosphinsäure abgetrennt. Man erhält 227,3 g Produkt (I), welches nach P³¹-NMR 98,3 %ig ist (92,0 % d.Th.).

### Beispiel 2

Bei 0 °C werden 300 ml trockenes n-Butanol bei 20 mbar vorgelegt und unter Rühren innerhalb von 1 Stunde mit 189 g technischem Methyl-(2-chlorcarbonyl-ethyl)-phosphinsäurechlorid (II) (92 %ig nach P³¹-NMR) versetzt. Unter reduziertem Druck von 20 mbar läßt man bei 0 °C nachrühren und die Temperatur anschließend auf Raumtemperatur kommen. Bei 50 °C Badtemperatur und reduziertem Druck werden schließlich Reste an Chlorwasserstoff und n-Butanol abdestilliert. man erhält 267,8 g Rohmischung, welche nach P³¹-NMR zu 87,2 % (96,2 % d.Th.) aus Methyl-(2-carbo-n-butoxy-ethyl)-phosphinsäure-n-butylester (I) und zu 10,5 % (14 % d.Th.) Methyl-(2-carbo-n-butoxy-ethyl)-phosphinsäure zusammengesetzt ist. Bei 145 °C Manteltemperatur und bei 0,1 mbar wird der Diester (I) über einen Dünnschichtverdampfer von der Phosphinsäure abgetrennt. Man erhält so 232,5 g Produkt (98,5 %ig nach P³¹-NMR), was einer Ausbeute von 94,3 % d.Th. entspricht.

### Beispiel 3

Man verfährt analog Beispiel 1, wobei jedoch die Reaktionstemperatur 20 °C beträgt sowie anstelle von 300 ml n-Butanol 200 ml n-Butanol eingesetzt werden. Man erhält nach Entfernen der HCl und des überschüssigen Butanols 272 g Rohausbeute mit 77 % Gehalt an Diester (I) (87,2 % d.Th).

### Vergleichsbeispiel

300 ml absolutes Methanol werden bei 0 °C vorgelegt und in 1 Stunde mit 189 g technischem Methyl-(2-chlorcarbonyl-ethyl)-phosphinsäurechlorid (II) (95,4 %ig) versetzt. Man rührt 30 Minuten bei 0 °C nach, läßt auf Raumtemperatur kommen und engt dann im Vakuum bei 50 °C Badtemperatur ein, wobei Chlorwasserstoff, Methylchlorid und Methanol entweichen. Man erhält 175,3 g Rohmischung, die laut P³¹-NMR 19,8 % (20,2 % d.Th.) Methyl-(2-carbomethoxy-ethyl)-phosphinsäure-methylester und 75,8 % (83,9 % d.Th.) Methyl-(2-carbomethyloxy-ethyl)-phosphinsäure enthält.

## Patentansprüche

1. Verfahren zur Herstellung von Verbindungen der Formel I 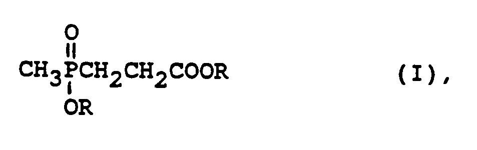 worin
R jeweils unabhängig voneinander (C₄-C₈)Alkyl bedeutet, dadurch gekennzeichnet, daß man eine Verbindung der Formel II 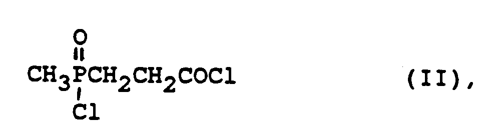 mit einem Alkohol oder einem Gemisch von Alkoholen der Formel III
ROH (III),
worin
R die bei Formel I genannte Bedeutung hat, bei Temperaturen von -30 °C bis +50 °C umsetzt.

2. Verfahren nach Anspruch 1, dadurch gekennzeichnet, daß man die Umsetzung bei Temperaturen von -10 °C bis +20 °C durchgeführt.

3. Verfahren nach Anspruch 1 oder 2, dadurch gekennzeichnet, daß R für Butyl steht.

4. Verfahren nach Anspruch 3, dadurch gekennzeichnet, daß R für n-Butyl steht.

5. Verfahren nach einem oder mehreren der Ansprüche 1 bis 4, dadurch gekennzeichnet, daß man bei der Umsetzung entstandene Salzsäure und überschüssigen Alkohol der Formel III unter reduziertem Druck bei einer Temperatur bis zu 50 °C entfernt und das erhaltene Rohprodukt destilliert.

6. Verfahren nach einem oder mehreren der Ansprüche 1 bis 5, dadurch gekennzeichnet, daß man 2 bis 4 Mol Alkohol der Formel III pro 1 Mol Verbindung der Formel II einsetzt.

7. Verfahren nach einem oder mehreren der Ansprüche 1 bis 6, dadurch gekennzeichnet, daß die Umsetzung bei Normaldruck durchgeführt wird.

8. Verfahren nach einem oder mehreren der Ansprüche 1 bis 6, dadurch gekennzeichnet, daß die Umsetzung unter Sieden der Reaktionslösung in einem Druckbereich von 1013 bis 5 mbar durchgeführt wird.

## Claims

1. A process for the preparation of a compound of the formula I 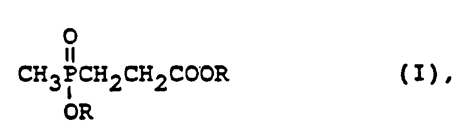 in which R in each case independently of one another is (C₄-C₈)alkyl, which comprises reacting a compound of the formula II 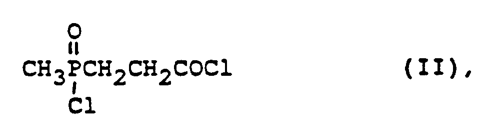 with an alcohol or a mixture of alcohols of the formula III
ROH (III)
in which R has the meaning given for formula I, at temperatures of -30°C to +50°C.

2. The process as claimed in claim 1, wherein the reaction is carried out at temperatures from -10°C to +20°C.

3. The process as claimed in claim 1 or 2, wherein R is butyl.

4. The process as claimed in claim 3, wherein R is n-butyl.

5. The process as claimed in one or more of claims 1 to 4, wherein hydrochloric acid and excess alcohol of the formula III formed in the reaction are removed under reduced pressure at a temperature of up to 50°C and the crude product obtained is distilled.

6. The process as claimed in one or more of claims 1 to 5, wherein 2 to 4 mol of alcohol of the formula III are employed per mol of compound of the formula II.

7. The process as claimed in one or more of claims 1 to 6, wherein the reaction is carried out at normal pressure.

8. The process as claimed in one or more of claims 1 to 6, wherein the reaction is carried out while boiling the reaction solution in a pressure range from 1013 to 5 mbar.

## Revendications

1. Procédé pour la préparation de composés de formule I 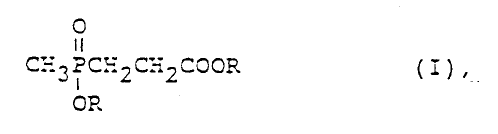 dans laquelle R représente chaque fois de façon indépendante un alkyle en C₄-C₈, caractérisé en ce que l'on fait réagir un composé de formule II 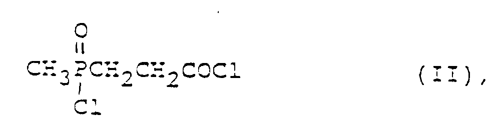 avec un alcool ou un mélange d'alcools de formule III
ROH (III),
dans laquelle R a la signification donnée pour la formule I, à des températures de -30°C à + 50°C.

2. Procédé selon la revendication 1, caractérisé en ce que l'on effectue la réaction à des températures de -10°C à + 20°C.

3. Procédé selon la revendication 1 ou 2, caractérisé en ce que R représente le butyle.

4. Procédé selon la revendication 3, caractérisé en ce que R représente le n-butyle.

5. Procédé selon une ou plusieurs des revendications 1 à 4, caractérisé en ce que l'on élimine sous pression réduite, à une température allant jusqu'à 50° C, l'acide chlorhydrique produit lors de la réaction et l'alcool en excès de formule III, et en ce que l'on distille le produit brut obtenu.

6. Procédé selon une ou plusieurs des revendications 1 à 5, caractérisé en ce que l'on utilise de 2 à 4 moles d'alcool de formule III par mole de composé de formule II.

7. Procédé selon une ou plusieurs des revendications 1 à 6, caractérisé en ce que la réaction est effectuée à la pression normale.

8. Procédé selon une ou plusieurs des revendications 1 à 6, caractérisé en ce que la réaction est effectuée en faisant bouillir la solution de réaction dans un domaine de pression de 1013 à 5 mbars.
